# FASCICULE DE BREVET EUROPEEN

(11) **EP 3 253 615 B1**
(45) Date de publication et mention de la délivrance du brevet: **10.04.2019**
(21) Numéro de dépôt: 16707865.8
(22) Date de dépôt: 04.02.2016
(51) Int. Cl.: B60N 2/20, B60N 2/22, B60N 2/225

(54) **ENSEMBLE D'ARTICULATION DEBRAYABLE POUR SIEGE DE VEHICULE AUTOMOBILE**
ENTKUPPELBARE GELENKANORDNUNG FÜR EINEN KRAFTFAHRZEUGSITZ
RELEASABLE HINGE ASSEMBLY FOR A MOTOR VEHICLE SEAT

(30) Priorité: 06.02.2015 FR 1550939
(43) Date de publication de la demande: 13.12.2017
(73) Titulaire: PSA AUTOMOBILES S.A., 78300 Poissy (FR)
(72) Inventeur: HAYAT, David, 78770 Auteuil (FR); PINTO TEIXEIRA, Frederic, 91160 Ballainvilliers (FR)
(86) Numéro de dépôt international: PCT/FR2016/050231
(87) Numéro de publication internationale: WO 2016/124860

(56) Documents cités:
- DE-A1-102011 011 571
- FR-A1- 2 993 215

## Description

### Domaine de l'invention

La présente invention concerne d'une manière générale les ensembles d'articulation permettant de régler l'inclinaison entre le dossier et l'assise d'un siège de véhicule automobile, et vise en particulier ceux de type « continu » autorisant un réglage fin de cette inclinaison.

### Arrière-plan de l'invention

Un tel ensemble d'articulation « continu » qui est décrit par exemple dans la demande française FR 2 743 032, comporte classiquement :
- un premier flasque comprenant une denture intérieure centrée sur son axe ;
- un deuxième flasque présentant un axe parallèle et légèrement distant de l'axe dudit premier flasque, lesdits premier et deuxième flasques étant prévus pour être fixés respectivement à l'assise et au dossier du siège ou inversement ;
- un mécanisme à excentrique reliant ladite denture intérieure à une denture extérieure centrée sur l'axe dudit deuxième flasque ;
- un organe de commande pour faire tourner ledit mécanisme à excentrique et entrainer la rotation de ladite denture extérieure dans ladite denture intérieure, de sorte à faire varier la position angulaire relative entre ladite assise et ledit dossier.

Ce type d'articulation qui autorise un réglage fin de l'angle d'inclinaison entre l'assise et le dossier du siège, présente toutefois l'inconvénient d'empêcher l'utilisateur de faire passer rapidement le dossier de sa position relevée vers une position rabattue permettant l'accès aux places arrière du véhicule ou vers une position de mise en tablette optimisant le volume de chargement du véhicule.

Afin de palier à cet inconvénient, la demande de brevet française FR 2,993,215 propose un tel ensemble d'articulation dont la denture extérieure est montée sur un pignon, et qui comporte en outre un disque de débrayage lié en rotation avec le deuxième flasque, ainsi qu'un organe de débrayage actionnable en rotation et apte à entrainer le disque de débrayage en translation axiale pour faire passer cet ensemble d'articulation d'une configuration verrouillée dans laquelle des moyens d'accouplement complémentaires situés sur le disque de débrayage et sur le pignon coopèrent de sorte à lier en rotation la denture extérieure et le deuxième flasque, à une configuration déverrouillée dans laquelle les moyens d'accouplement complémentaires sont écartés l'un de l'autre de sorte que la denture extérieure et le deuxième flasque sont désolidarisés en rotation.

La translation axiale du disque de débrayage est obtenue par la coopération de plusieurs bossages formant chemin de came situés sur l'organe de débrayage avec des empreintes complémentaires situées sur le disque de débrayage.

Les moyens d'accouplement complémentaires sont constitués par une nervure octogonale s'étendant depuis ledit pignon et destinée à coopérer avec une rainure octogonale complémentaire ménagée dans le disque de débrayage.

Grâce à la présence de cet organe de débrayage qui permet d'établir ou de supprimer la liaison en rotation entre la denture extérieure et le deuxième flasque en commandant le déplacement axial du disque de débrayage, ce type d'ensemble d'articulation peut ainsi passer facilement d'un mode de fonctionnement de type « continu » dans lequel l'utilisateur peut effectuer un réglage fin de l'angle d'inclinaison entre l'assise et le dossier du siège, à un mode de fonctionnement de type « discontinu » dans lequel les deux flasques peuvent tourner librement l'un autour de l'autre de sorte que l'utilisateur peut faire varier de façon rapide cet angle d'inclinaison, notamment pour autoriser l'accès aux places arrière (APA) ou pour réaliser une mise en tablette (MET) de ce dossier.

Toutefois, aucune des positions angulaires atteintes rapidement via le mode de fonctionnement « discontinu » ne peut être verrouillée, puisqu'il est nécessaire de faire revenir le dossier dans sa position initiale pour que le mécanisme d'articulation se re-verrouille.

Cette absence de verrouillage empêche notamment l'utilisateur de prendre appui sur le dossier incliné du siège lors de l'accès aux places arrière, ou lorsque le dossier est en tablette ou en mode couchette.

### Objet et résumé de l'invention

La présente invention vise donc à proposer un tel ensemble d'articulation permettant de verrouiller au moins une position angulaire prédéterminée atteinte via le mode de fonctionnement « discontinu ».

Elle propose à cet effet, un ensemble d'articulation débrayable pour siège de véhicule automobile comportant :
- un premier flasque comprenant une denture intérieure centrée sur son axe ;
- un deuxième flasque présentant un axe parallèle et légèrement distant de l'axe dudit premier flasque, lesdits premier et deuxième flasques étant prévus pour être fixés respectivement à l'assise et au dossier du siège ou inversement ;
- un mécanisme à excentrique reliant ladite denture intérieure à une denture extérieure montée sur un pignon et centrée sur l'axe dudit deuxième flasque ;
- un organe de commande pour faire tourner ledit mécanisme à excentrique et entrainer la rotation de ladite denture extérieure dans ladite denture intérieure ;
- un disque de débrayage lié en rotation avec ledit deuxième flasque ;
- un organe de débrayage actionnable en rotation et apte à entrainer ledit disque de débrayage en translation axiale pour faire passer ledit ensemble d'articulation d'une configuration verrouillée dans laquelle des moyens d'accouplement complémentaires situés sur ledit disque de débrayage et sur ledit pignon coopèrent de sorte à lier en rotation ladite denture extérieure et ledit deuxième flasque, à une configuration déverrouillée dans laquelle lesdits moyens d'accouplement
complémentaires sont écartés l'un de l'autre de sorte que ladite denture extérieure et ledit deuxième flasque sont désolidarisés en rotation, lesdits moyens d'accouplement complémentaires étant aptes à lier en rotation ladite denture extérieure et ledit deuxième flasque selon plusieurs indexations angulaires prédéterminées entre ces deux éléments; caractérisé en ce que la translation axiale dudit disque de débrayage est obtenue par la coopération d'au moins un bossage formant chemin de came et d'une empreinte complémentaire situés respectivement sur ledit pignon et sur ledit organe de débrayage ou inversement.

Le fait que la translation axiale du disque de débrayage soit obtenue par la coopération entre des bossages et des empreintes complémentaires situés sur des éléments (pignon et organe de débrayage) non solidaires du deuxième flasque (contrairement à l'ensemble d'articulation de l'art antérieur où les bossages étaient disposés sur le disque de débrayage solidaire en rotation avec ce deuxième flasque) permet de ne pas modifier la position relative entre ces bossages et empreintes lors du pivotement du deuxième flasque dans la configuration déverrouillée (ces derniers demeurant en regard les uns des autres dès lors que l'organe de débrayage n'est plus actionné en rotation par l'utilisateur et occupe dans sa position initiale).

Cette configuration particulière associée au fait que les moyens d'accouplement complémentaires sont aptes à lier en rotation la denture extérieure et le deuxième flasque selon plusieurs indexations angulaires prédéterminées, permet ainsi à cette denture extérieure et à ce deuxième flasque de se re-solidariser automatiquement en rotation dès lors que ces moyens d'accouplement complémentaires correspondent à nouveau.

L'ensemble d'articulation selon l'invention offre ainsi la possibilité de verrouiller certaines positions angulaires prédéterminées (telles que celles d'accès aux places arrière ou de mise en tablette) via le mode de fonctionnement « discontinu ».

Selon des caractéristiques préférées de l'ensemble d'articulation, prises seules ou en combinaison :
- lesdits moyens d'accouplement complémentaires comportent une nervure polygonale régulière apte à coopérer avec une rainure complémentaire, ladite nervure s'étendant depuis ledit pignon et ladite rainure complémentaire étant ménagée dans ledit disque de débrayage ou inversement ;
- ladite nervure polygonale régulière et ladite rainure complémentaire présentent un nombre de côtés compris entre 6 et 12 ;
- ladite nervure polygonale régulière et ladite rainure complémentaire présentent un nombre de côtés égal à 8 ;
- lesdits moyens d'accouplement sont formés par une protubérance apte à coopérer avec plusieurs empreintes complémentaires réparties angulairement sur un même cercle imaginaire, ladite protubérance saillant dudit pignon tandis que lesdits empreintes complémentaires sont ménagées dans ledit organe de débrayage ou inversement ;
- ledit bossage formant chemin de came s'étend de manière symétrique de part et d'autre d'un plan diamétral passant par l'axe dudit deuxième flasque, et suivant un profil circonférentiel en chapeau de gendarme
- ledit ensemble d'articulation comporte trois dits bossages et trois dites empreintes complémentaires angulairement répartis de manière régulière ;
- ledit ensemble d'articulation comporte des moyens élastiques de rappel situés entre ledit deuxième flasque et ledit disque de débrayage, et sollicitant en permanence ce dernier en direction dudit pignon ; et/ou
- lesdits moyens de rappel élastiques sont formés par une rondelle ondulée prise en sandwich entre ledit deuxième flasque et ledit disque de débrayage.

La présente invention vise également sous un second aspect, un siège de véhicule automobile comportant deux tels ensembles d'articulation s'étendant symétriquement vis-à-vis du plan médian dudit siège.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue éclatée en perspective de trois quart avant des éléments constitutifs de ensemble d'articulation selon l'invention ;
- la figure 2 représente une vue éclatée en perspective de trois quart arrière des éléments constitutifs de l'ensemble d'articulation ;
- la figure 3 représente une vue en perspective agrandie de trois quart arrière de l'organe de débrayage que comporte l'ensemble d'articulation selon l'invention ;
- la figure 4 représente une vue en perspective agrandie de trois quart avant du pignon que comporte l'ensemble d'articulation selon l'invention ;
- la figure 5 représente une vue en coupe transversale de l'ensemble d'articulation selon l'invention occupant sa configuration de verrouillage ; et
- la figure 6 représente une vue similaire à la figure 4 dans laquelle l'ensemble d'articulation selon l'invention occupe sa configuration de déverrouillage.

### Description détaillée d'un mode de réalisation

L'ensemble d'articulation 1 représenté sur les figures est intégré dans un siège de véhicule automobile (non illustré) et permet de régler l'inclinaison relative entre le dossier et l'assise de ce siège.

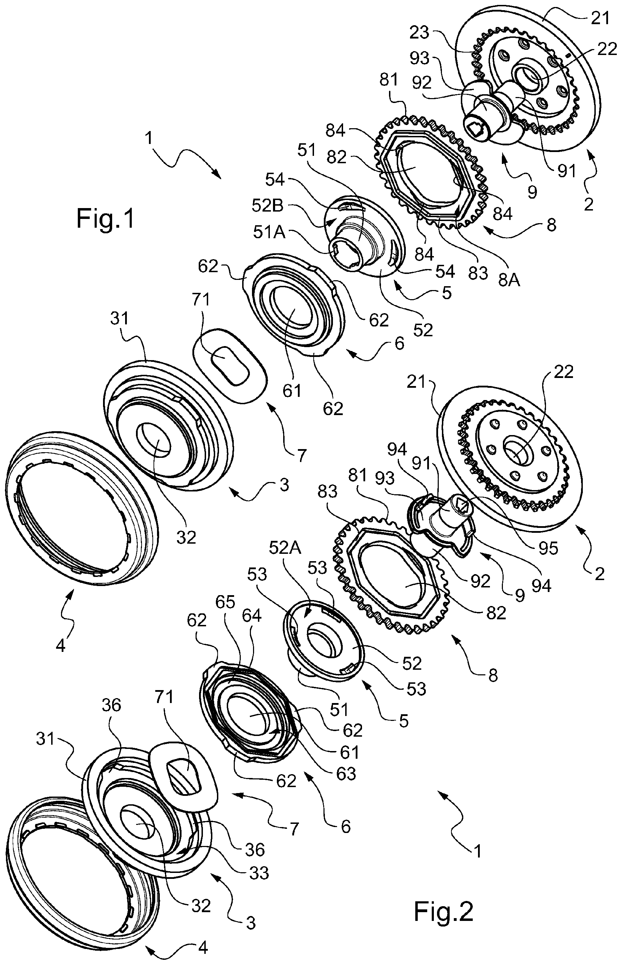

Comme illustré sur les figures 1 et 2, l'ensemble d'articulation 1 comporte un premier flasque 2 et un deuxième flasque 3 fixés respectivement au dossier et à l'assise du siège ou inversement, de préférence par soudage.

Les rebords périphériques 21, 31 des deux flasques 2 et 3 sont maintenus accolés l'un à l'autre par l'intermédiaire d'une bague annulaire de maintien 4.

Chaque flasque 2, 3 présente une ouverture centrale respective 22, 32 de forme circulaire.

Le flasque 2 présente en face interne une denture intérieure 23 centrée sur son axe.

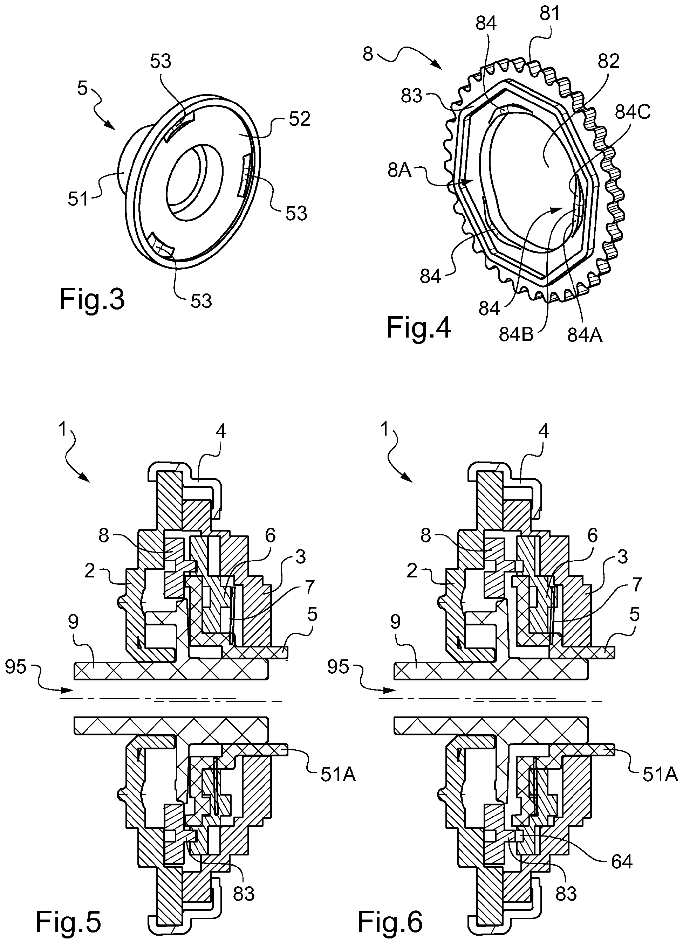

Le flasque 3 présente un axe parallèle et légèrement distant de celui du flasque 2, comme cela est bien visible sur les figures 5 et 6.

Les deux flasques délimitent un espace à l'intérieur duquel sont positionnés un organe de débrayage 5, un disque de débrayage 6, une rondelle ondulée 7 formant ressort, un pignon 8, un mécanisme à excentrique (non représenté par soucis de simplification des figures), et un organe de commande excentrique 9.

Le disque de débrayage 6 présente une ouverture centrale circulaire 61 dont le diamètre est légèrement supérieur à celle de l'ouverture 32 du flasque 3 et qui est centrée sur l'axe de ce flasque 3.

Il est monté coulissant dans un logement 33 de forme correspondante usiné côté interne du flasque 3 (figure 2). Comme illustré sur les figures, il comporte trois excroissances périphériques radiales 62 angulairement réparties de manière régulière, qui sont logées dans trois empreintes correspondantes 36 situées en périphérie du logement 33, de sorte que le disque 6 et le flasque 3 sont solidaires en rotation.

Le disque de débrayage 6 comporte également sur sa face orientée à l'opposée du flasque 3 et vers l'organe de débrayage 6, un évidemment annulaire 63 s'étendant sur le pourtour de son ouverture 61, ainsi qu'une rainure octogonale régulière 64 s'étendant à proximité de son arête périphérique (par « régulière », il faut entendre que la rainure 64 constitue un octogone dont tous les cotés sont de même longueur et tous les angles formés par deux cotés consécutifs sont de mesure identique).

Une gorge annulaire 65 est en outre ménagée en périphérie de cet évidemment annulaire 63.

La rondelle ondulée 7 formant ressort présente également une ouverture centrale circulaire 71 de même diamètre que l'ouverture 32 du flasque 3, et axée sur l'axe de ce flasque 3.

Comme illustré sur les figures, cette rondelle 7 est prise en sandwich à l'intérieur du logement 33 entre le flasque 3 et le disque de débrayage 6, de sorte qu'elle sollicite en permanence ce disque de débrayage 6 en direction du pignon 8.

Le pignon 8 comporte une denture extérieure 81 et une ouverture centrale 82 centrées sur l'axe du flasque 3.

Il comprend également sur sa face 8A orientée à l'opposée du flasque 2, une nervure octogonale 83 s'étendant à proximité de son arête périphérique et qui est complémentaire de la rainure octogonale 64 du disque de débrayage 6 avec laquelle elle est destinée à coopérer.

La nervure 83 et la rainure 64 constituent ainsi des moyens d'accouplement multi-positions aptes à lier en rotation le pignon 8 (doté de la denture extérieure 81) avec le deuxième flasque 3 selon huit indexations angulaires différentes entre ces deux éléments et espacées de 45° les unes des autres.

La denture extérieure 81 qui comporte un nombre de dents inférieur d'au moins une dent à celui de la denture intérieure 23 du flasque 2, est engrainée avec cette dernière.

Le pignon 8 comprend en outre sur cette même face 8A, trois bossages en arc de cercle 84 prenant racine sur le pourtour de son ouverture centrale 82 en étant angulairement répartis de manière régulière.

Chacun de ces bossages 84 s'étend de manière symétrique de part et d'autre d'un plan diamétral passant par l'axe du flasque 3, et suivant un profil circonférentiel en chapeau de gendarme. Chaque bossage 84 forme ainsi un chemin de came constitué par deux rampes d'appui descendantes 84A, 84C qui s'étendent de part et d'autre d'un plateau surélevé 84B (figure 4).

L'organe de débrayage 5 comporte un manchon cylindrique 51 centré sur l'axe du flasque 3, qui s'étend depuis une collerette 52 et traverse successivement le disque de débrayage 6, la rondelle ondulée 7 et le flasque 3 via leurs ouvertures respectives 61, 71 et 32.

L'extrémité libre 51A du manchon 51 qui saille du flasque 3 (figures 5 et 6), est destinée à recevoir une tige d'entrainement reliée mécaniquement à une molette de commande (non représentée sur les figures) dont la rotation entraine celle de l'organe de débrayage 5.

La collerette 52 dont la forme est complémentaire de l'évidemment annulaire 63 du disque de débrayage 6, présente un diamètre légèrement supérieur à celui de l'ouverture 82 du pignon 8. Elle comporte trois empreintes en arc de cercle 53 ménagées sur sa face 52A orientée en regard du pignon 8 (figure 3).

Ces empreintes 53, angulairement répartis de manière régulière, prennent racine le long de la circonférence d'un cercle imaginaire situé à proximité de la bordure extérieure de la collerette 52, et sont complémentaires des trois bossages 84 du pignon 8 avec lesquels elles sont destinées à coopérer.

De par la faible épaisseur de la collerette 52, les empreintes 53 forment sur sa face opposée 52B des reliefs 54 qui sont logés dans la gorge annulaire 65 du disque de débrayage 6 (figures 1 et 2).

Un mécanisme à excentrique connu en soi et non représenté sur les figures par soucis de simplification, est disposé à l'intérieur de l'ouverture centrale 82 pratiquée dans le pignon 8.

L'organe de commande excentrique 9 de ce mécanisme est réalisé d'une seule pièce et comprend deux moyeux cylindriques 91, 92 s'étendant de part et d'autre d'un disque échancré 93 logé dans l'ouverture 82 du pignon 8, et présentant des doigts d'entrainement 94 faisant axialement saillie en direction du premier flasque 2.

Les moyeux cylindriques 91, 92 sont centrés respectivement sur l'axe du premier flasque 2 et sur celui du deuxième flasque 3.

D'autre part, le premier moyeu cylindrique 91 est reçu à l'intérieur de l'ouverture 22 du premier flasque 2 tandis que le second moyeu cylindrique 92 est reçu à l'intérieur du manchon 51 du disque de débrayage 6.

Le premier moyeu 91 présente également un évidement central 95 prévu pour la réception d'une tige d'entrainement reliée à une seconde molette de commande.

L'actionnement en rotation de cette seconde molette entraine la transmission d'un couple à l'organe de commande excentrique 9 qui va faire tourner le mécanisme à excentrique et provoquer un mouvement excentré du pignon 8 par rapport à la denture intérieure 23 du flasque 2.

On va maintenant décrire rapidement le fonctionnement de l'ensemble d'articulation 1 selon l'invention.

Cet ensemble d'articulation présente une première configuration de verrouillage, illustrée sur la figure 5, dans laquelle le disque de débrayage 6 est plaqué, par l'action de la rondelle ondulée 7 formant ressort, contre le pignon 8 ; avec la nervure octogonale 83 de ce pignon qui est logée dans la rainure complémentaire 64 de ce disque de débrayage 6, de sorte que le flasque 3, le disque de débrayage 6 et le pignon 8 sont tous solidaires en rotation.

Dans cette configuration, les trois bossages 84 de ce pignon 8 sont logés dans les trois empreintes complémentaires 53 de l'organe de débrayage 5.

Dans cette configuration de verrouillage, lorsqu'un couple de rotation est transmis à l'organe de commande excentrique 9 via la seconde molette de commande, les deux flasques 2 et 3 pivotent l'un par rapport à l'autre de manière continue, ce qui permet de régler précisément l'inclinaison du dossier par rapport à l'assise du siège.

Lorsque l'utilisateur actionne en rotation la première molette de commande reliée mécaniquement à l'organe de débrayage 5, ce dernier est entrainé en rotation autour de l'axe du flasque 3.

Lors de cette rotation, les reliefs 54 circulent librement à l'intérieur la gorge annulaire 65 du disque de débrayage 6 sans provoquer aucun déplacement axial relatif entre l'organe de débrayage 5 et ce disque 6.

Cette rotation de l'organe de débrayage 5 et donc des empreintes 53, provoque également le coulissement des rampes 84A (ou 84C selon le sens de rotation imprimé à cet organe de débrayage 5) des bossages 84 le long des contre-rampes correspondantes des empreintes 53, et ce jusqu'à ce que chacun des bossages 84 ressorte complètement de l'empreinte 53 dans laquelle il était contenu, avec son plateau surélevé 84B qui vient reposer contre une portion plate de la collerette 52 située dans le prolongement de cette empreinte 53.

Cette coopération entre les bossages 84 et les empreintes 53 lors de la rotation de l'organe de débrayage 5, entraine donc une translation axiale en direction du flasque 3 de cet organe de débrayage 5 (ainsi que celle du disque de débrayage 6 qui lui est accolé) provoquant la compression de la rondelle ondulée 7.

Cette translation axiale du disque de débrayage 6 a pour conséquence de le désolidariser en rotation (ainsi que le flasque 3) vis-à-vis du pignon 8, la nervure octogonale 83 de ce pignon 8 n'étant plus logée dans la rainure 64 de ce disque de débrayage 6).

L'ensemble d'articulation 1 se trouve alors en configuration déverrouillée (figure 6) dans laquelle les deux flasques 2 et 3 peuvent pivoter librement l'un par rapport à l'autre, ce qui permet notamment de faire passer très rapidement le dossier d'une position relevée à une position intermédiaire ou complètement abaissée permettant l'accès aux places arrière du véhicule ou la mise en tablette de ce dossier.

L'utilisateur alors relâcher la première molette de commande (de sorte que celle-ci soit rappelée vers sa position initiale par des moyens élastiques de rappel non représentés) sans pour autant provoquer le retour immédiat de l'ensemble d'articulation 1 en configuration verrouillée, puisque la nervure octogonale 83 du pignon 8 n'est plus en phase avec la rainure 64 du disque de débrayage 6.

Le pivotement du dossier peut être ainsi poursuivi librement par l'utilisateur jusqu'à ce que le flasque 3 (et le disque de débrayage 6 qui lui est solidairement lié en rotation) ait tourné de 45° vis-à-vis du pignon 8.

A cet instant, la nervure octogonale 83 du pignon 8 revient en effet en phase avec la rainure 64 du disque de débrayage 6, de sorte que la force de rappel élastique exercée par la rondelle ondulée 7 ramène automatiquement l'ensemble d'articulation 1 dans sa configuration verrouillée.

Le dossier du siège ayant pivoté de 45° par rapport à l'assise, on se retrouve alors dans une position autorisant l'accès aux places arrière (APA). Le mécanisme d'articulation étant en configuration verrouillée, le dossier offre ainsi un appui stable facilitant cette accès à l'arrière du véhicule.

Si l'utilisateur souhaite réaliser une mise en tablette du siège (MET), ce dernier doit attendre le passage cette position intermédiaire à 45° avant de relâcher la première molette de commande, de sorte que le verrouillage de l'ensemble d'articulation intervienne seulement après un pivotement de 90° du flasque 3 par rapport au pignon 8.

De préférence, les ensembles d'articulation selon l'invention sont prévus pour être montés par paire sur un siège de véhicule automobile : chaque ensemble d'articulation étant disposé sur un côté latéral correspondant de ce siège.

Dans ce cas de figure, les deux ensembles d'articulation s'étendent symétriquement vis-à-vis du plan médian du siège et synchronisés l'un avec l'autre de sorte que l'actionnement de l'une des deux molettes de commande entraine la rotation simultanée des deux organes de commande excentrique 9 ou celle des deux organes de débrayage 5.

De par la disposition symétrique des deux ensembles d'articulation, cette rotation simultanée des deux organes de débrayage 5 s'effectue pour l'un dans le sens des aiguilles d'une montre et pour l'autre dans le sens contraire. Il en est également de même pour les deux organes de commande excentrique 9.

On notera que le fait que les bossages 84 du pignon 8 (ainsi que les empreintes 53 de l'organe de débrayage 5 qui leurs sont complémentaires) s'étendent de manière symétrique de part et d'autre d'un plan diamétral, permet de s'affranchir d'un référencement différent de ces deux pièces pour chacun des deux côtés latéraux du siège.

L'ensemble d'articulation selon l'invention peut ainsi être monté indifféremment sur les deux côtés latéraux du siège, ce qui engendre une réduction significative de son coût de revient par effet volume.

Selon des variantes de réalisation non représentées, les moyens d'accouplement multi-positions aptes à lier en rotation le pignon 8 (doté de la denture extérieure 81) avec le deuxième flasque 3 sont différents. Ceux-ci peuvent par exemple être constitués par une nervure polygonale régulière (et sa rainure complémentaire) présentant un nombre différent de côtés (compris de préférence entre 6 et 12 et égal par exemple à 6, 9, ou 12), de sorte à obtenir d'autres indexations angulaires d'accouplement (espacées de 30 à 60°). Ces moyens d'accouplement peuvent également être formés une protubérance apte à coopérer avec plusieurs empreintes complémentaires réparties angulairement sur un même cercle imaginaire, ladite protubérance saillant dudit pignon 8 tandis que lesdits empreintes complémentaires sont ménagées dans ledit organe de débrayage 5 ou inversement.

Selon d'autres variantes de réalisation non représentées, la disposition des bossages 84 formant chemins de came et des empreintes 53 est inversée : les bossages prenant racine sur la collerette 52 de l'organe de débrayage 5 tandis que les empreintes sont ménagées au niveau du pignon 8.

Selon encore d'autres variantes de réalisation non représentées :
- le nombre de couples bossages 84 / empreintes 53 est différent de trois et égal par exemple à 2 ou 4 ;
- les moyens pour assurer le montage coulissant axial du disque de débrayage 6 l'intérieur du flasque 3 sont également différents : les excroissances périphériques radiales 62 coopérant avec les trois empreintes correspondantes 36 situées en périphérie du logement 33 étant remplacées par une protubérance apte à coopérer avec une empreinte complémentaire de plus grande profondeur ; et/ou
- la rondelle ondulée est remplacée par un autre moyen élastique de rappel tel qu'un un ressort hélicoïdal.

D'une manière générale, on rappelle que la présente invention ne se limite pas aux formes de réalisation décrites et représentées, mais qu'elle englobe toute variante d'exécution, pour autant que l'invention demeure telle que définie par les revendications.

## Revendications

1. Ensemble d'articulation débrayable pour siège de véhicule automobile comportant :
- un premier flasque (2) comprenant une denture intérieure (23) centrée sur son axe ;
- un deuxième flasque (3) présentant un axe parallèle et légèrement distant de l'axe dudit premier flasque (2), lesdits premier et deuxième flasques (2, 3) étant prévus pour être fixés respectivement à l'assise et au dossier du siège ou inversement ;
- un mécanisme à excentrique reliant ladite denture intérieure (23) à une denture extérieure (81) montée sur un pignon (8) et centrée sur l'axe dudit deuxième flasque (3) ;
- un organe de commande (9) pour faire tourner ledit mécanisme à excentrique et entrainer la rotation de ladite denture extérieure (81) dans ladite denture intérieure (23) ;
- un disque de débrayage (6) lié en rotation avec ledit deuxième flasque (3) ;
- un organe de débrayage (5) actionnable en rotation et apte à entrainer ledit disque de débrayage (6) en translation axiale pour faire passer ledit ensemble d'articulation d'une configuration verrouillée dans laquelle des moyens d'accouplement complémentaires (83, 64) situés sur ledit disque de débrayage (6) et sur ledit pignon (8) coopèrent de sorte à lier en rotation ladite denture extérieure (81) et ledit deuxième flasque (3), à une configuration déverrouillée dans laquelle lesdits moyens d'accouplement complémentaires (83, 64) sont écartés l'un de l'autre de sorte que ladite denture extérieure (81) et ledit deuxième flasque (3) sont désolidarisés en rotation,
lesdits moyens d'accouplement complémentaires (83, 64) étant aptes à lier en rotation ladite denture extérieure (81) et ledit deuxième flasque (3) selon plusieurs indexations angulaires prédéterminées entre ces deux éléments; **caractérisé en ce que** la translation axiale dudit disque de débrayage (6) est obtenue par la coopération d'au moins un bossage formant chemin de came (84) et d'une empreinte complémentaire (53) situés respectivement sur ledit pignon (8) et sur ledit organe de débrayage (5) ou inversement.

2. Ensemble d'articulation selon la revendication 1, **caractérisé en ce que** lesdits moyens d'accouplement complémentaires comportent une nervure polygonale régulière (83) apte à coopérer avec une rainure complémentaire (64), ladite nervure (83) s'étendant depuis ledit pignon (8) et ladite rainure complémentaire (64) étant ménagée dans ledit disque de débrayage (6) ou inversement.

3. Ensemble d'articulation selon la revendication 2, **caractérisé en ce que** ladite nervure polygonale régulière (83) et ladite rainure complémentaire (64) présentent un nombre de côtés compris entre 6 et 12.

4. Ensemble d'articulation selon la revendication 3, **caractérisé en ce que** ladite nervure polygonale régulière (83) et ladite rainure complémentaire (64) présentent un nombre de côtés égal à 8.

5. Ensemble d'articulation selon la revendication 1, **caractérisé en ce que** lesdits moyens d'accouplement sont formés par une protubérance apte à coopérer avec plusieurs empreintes complémentaires réparties angulairement sur un même cercle imaginaire, ladite protubérance saillant dudit pignon tandis que lesdits empreintes complémentaires sont ménagées dans ledit organe de débrayage ou inversement.

6. Ensemble d'articulation selon l'une des revendications 1 à 5, **caractérisé en ce que** ledit bossage formant chemin de came (84) s'étend de manière symétrique de part et d'autre d'un plan diamétral passant par l'axe dudit deuxième flasque (3), et suivant un profil circonférentiel en chapeau de gendarme.

7. Ensemble d'articulation selon l'une des revendications 1 à 6, **caractérisé en ce qu'**il comporte trois dits bossages (84) et trois dites empreintes complémentaires (53) angulairement répartis de manière régulière.

8. Ensemble d'articulation selon l'une des revendications 1 à 7, **caractérisé en ce qu'**il comporte des moyens élastiques de rappel (7) situés entre ledit deuxième flasque (3) et ledit disque de débrayage (6), et sollicitant en permanence ce dernier en direction dudit pignon (8).

9. Ensemble d'articulation selon la revendication 8, **caractérisé en ce que** lesdits moyens de rappel élastiques sont formés par une rondelle ondulée (7) prise en sandwich entre ledit deuxième flasque (3) et ledit disque de débrayage (6).

10. Siège de véhicule automobile comportant deux ensembles d'articulation selon l'une des revendications 1 à 9 et s'étendant symétriquement vis-à-vis du plan médian dudit siège.

## Patentansprüche

1. Entkuppelbare Gelenkanordnung für Kraftfahrzeugsitz, die Folgendes umfasst:
- einen ersten Flansch (2), der eine Innenverzahnung (23), die auf seiner Achse zentriert ist, umfasst;
- einen zweiten Flansch (3), der eine Achse parallel und leicht beabstandet von der Achse des ersten Flanschs (2) aufweist, wobei der erste und der zweite Flansch (2, 3) vorgesehen sind, um jeweils an dem Sitz und an der Rückenlehne des Sitzes befestigt zu sein oder umgekehrt;
- einen Exzentermechanismus, der die Innenverzahnung (23) mit einer Außenverzahnung (81), die auf ein Ritzel (8) montiert und auf der Achse des zweiten Flanschs (3) zentriert ist, verbindet;
- ein Steuerorgan (9), um den Exzentermechanismus drehen zu lassen und die Drehung der Außenverzahnung (81) in der Innenverzahnung (23) anzutreiben;
- eine Entkupplungsscheibe (6), die in Drehung mit dem zweiten Flansch (3) verbunden ist;
- ein Entkupplungsorgan (5), das in Drehung betätigbar und geeignet ist, die Entkupplungsscheibe (6) in axialer Verschiebung anzutreiben, um die Gelenkanordnung von einer verriegelten Konfiguration, in der komplementäre Kupplungsmittel (83, 64), die auf der Entkupplungsscheibe (6) und auf dem Ritzel (8) liegen, derart zusammenwirken, dass die Außenverzahnung (81) und der zweite Flansch (3) in Drehung verbunden sind, zu einer entriegelten Konfiguration, in der die komplementären Kupplungsmittel (83, 64) voneinander derart beabstandet sind, dass die Außenverzahnung (81) und der zweite Flansch (3) in Drehung getrennt sind, übergehen zu lassen, wobei die komplementären Kupplungsmittel (83, 64) geeignet sind, die Außenverzahnung (81) und den zweiten Flansch (3) gemäß mehreren vorbestimmten Winkelpositionierungen zwischen diesen zwei Elementen in Drehung zu verbinden;
**dadurch gekennzeichnet, dass** die axiale Verschiebung der Entkupplungsscheibe (6) durch das Zusammenwirken mindestens eines Höckers, der eine Kurvenbahn (84) bildet, und eines komplementären Abdrucks (53), die jeweils auf dem Ritzel (8) und auf dem Entkupplungsorgan (5) oder umgekehrt liegen, erhalten wird.

2. Gelenkanordnung nach Anspruch 1, **dadurch gekennzeichnet, dass** die komplementären Kupplungsmittel eine regelmäßige vieleckige Rippe (83) umfassen, die geeignet ist, mit einer komplementären Nut (64) zusammenzuwirken, wobei sich die Rippe (83) von dem Ritzel (8) erstreckt, und die komplementäre Nut (64) in der Entkupplungsscheibe (6) eingerichtet ist oder umgekehrt.

3. Gelenkanordnung nach Anspruch 2, **dadurch gekennzeichnet, dass** die regelmäßige vieleckige Rippe (83) und die komplementäre Nut (64) eine Anzahl von Seiten aufweisen, die zwischen 6 und 12 liegt.

4. Gelenkanordnung nach Anspruch 3, **dadurch gekennzeichnet, dass** die regelmäßige vieleckige Rippe (83) und die komplementäre Nut (64) eine Anzahl von Seiten gleich 8 aufweisen.

5. Gelenkanordnung nach Anspruch 1, **dadurch gekennzeichnet, dass** die Kupplungsmittel durch eine Ausstülpung gebildet sind, die geeignet ist, mit mehreren Abdrücken zusammenzuwirken, die winkelig auf einem selben imaginären Kreis verteilt sind, wobei die Ausstülpung aus dem Ritzel vorragt, während die komplementären Abdrücke in dem Entkupplungsorgan eingerichtet sind oder umgekehrt.

6. Gelenkanordnung nach einem der Ansprüche 1 bis 5, **dadurch gekennzeichnet, dass** sich der Höcker, der die Kurvenbahn (84) bildet, symmetrisch auf jeder Seite einer diametralen Ebene, die durch die Achse des zweiten Flanschs (3) durchgeht, und entlang eines umfänglichen Profils in Gendarmenhutform erstreckt.

7. Gelenkanordnung nach einem der Ansprüche 1 bis 6, **dadurch gekennzeichnet, dass** sie drei Höcker (84) und drei komplementär genannte Abdrücke (53), die gleichmäßig winkelig verteilt sind, umfasst.

8. Gelenkanordnung nach einem der Ansprüche 1 bis 7, **dadurch gekennzeichnet, dass** sie elastische Rückstellmittel (7) umfasst, die zwischen dem zweiten Flansch (3) und der Entkupplungsscheibe (6) liegen und diese Letztere ständig in Richtung des Ritzels (8) beanspruchen.

9. Gelenkanordnung nach Anspruch 8, **dadurch gekennzeichnet, dass** die elastischen Rückstellmittel aus einer Wellfeder (7), die zwischen dem zweiten Flansch (3) und der Entkupplungsscheibe (6) eingeschlossen ist, gebildet sind.

10. Kraftfahrzeugsitz, der zwei Gelenkanordnungen nach einem der Ansprüche 1 bis 9 umfasst, die sich symmetrisch gegenüber der mittleren Ebene des Sitzes erstrecken.

## Claims

1. A releasable hinge assembly for a motor vehicle seat comprising:
- a first flange (2) including an inner toothing (23) centred on its axis;
- a second flange (3) having a parallel and slightly distant axis from the axis of said first flange (2), said first and second flanges (2, 3) being provided to be fixed respectively to the seat base and to the backrest of the seat or vice versa;
- an eccentric mechanism connecting said inner toothing (23) to an outer toothing (81) mounted on a pinion (8) and centred on the axis of said second flange (3);
- a control member (9) for turning said eccentric mechanism and driving the rotation of said outer toothing (81) in said inner toothing (23);
- a release disc (6) linked in rotation with said second flange (3);
- a release member (5) able to be actuated in rotation and able to drive said release disc (6) in axial translation to pass said hinge assembly from a locked configuration in which complementary coupling means (83, 64) situated on said release disc (6) and on said pinion (8) cooperate so as to link in rotation said outer toothing (81) and said second flange (3), to an unlocked configuration in which said complementary coupling means (83, 64) are spaced apart from one another such that said outer toothing (81) and said second flange (3) are disengaged with regard to rotation, said complementary coupling means (83, 64) being able to link in rotation said outer toothing (81) and said second flange (3) according to several predetermined angular indices between these two elements;
**characterized in that** the axial translation of said release disc (6) is obtained by the cooperation of at least one boss forming a cam track (84) and of a complementary recess (53) situated respectively on said pinion (8) and on said release member (5) or vice versa.

2. The hinge assembly according to Claim 1, **characterized in that** said complementary coupling means comprise a regular polygonal rib (83) able to cooperate with a complementary groove (64), said rib (83) extending from said pinion (8) and said complementary groove (64) being arranged in said release disc (6) or vice versa.

3. The hinge assembly according to Claim 2, **characterized in that** said regular polygonal rib (83) and said complementary groove (64) have a number of sides comprised between 6 and 12.

4. The hinge assembly according to Claim 3, **characterized in that** said regular polygonal rib (83) and said complementary groove (64) have a number of sides equal to 8.

5. The hinge assembly according to Claim 1, **characterized in that** said coupling means are formed by a protuberance able to cooperate with several complementary recesses distributed angularly over the same imaginary circle, said protuberance projecting from said pinion while said complementary recesses are arranged in said release member or vice versa.

6. The hinge assembly according to one of Claims 1 to 5, **characterized in that** said boss forming a cam track (84) extends in a symmetrical manner either side of a diametral plane passing through the axis of said second flange (3), and following an arched circumferential profile.

7. The hinge assembly according to one of Claims 1 to 6, **characterized in that** it comprises three said bosses (84) and three said complementary recesses (53) angularly distributed in a regular manner.

8. The hinge assembly according to one of Claims 1 to 7, **characterized in that** it comprises elastic return means (7) situated between said second flange (3) and said release disc (6), and urging permanently the latter in the direction of said pinion (8).

9. The hinge assembly according to Claim 8, **characterized in that** said elastic return means are formed by a wave washer (7) sandwiched between said second flange (3) and said release disc (6).

10. A motor vehicle seat comprising two hinge assemblies according to one of Claims 1 to 9 and extending symmetrically with respect to the median plane of said seat.
